# EUROPEAN PATENT APPLICATION

(11) **EP 4 274 181 A1**
(43) Date of publication of application: **08.11.2023**
(21) Application number: 22172091.5
(22) Date of filing: 06.05.2022
(51) Int. Cl.: H04L 45/00, H04W 40/02

(54) **DATA FLOW PATH SWITCHING**

(71) Applicant: Nokia Technologies Oy, 02610 Espoo (FI)
(72) Inventor: Nassar, Mohamed Amin, 81477 Munich (DE); Thiebaut, Laurent, 92160 Antony (FR); Gkellas, Georgios, 13232 Petroupoli (GR)
(74) Representative: TBK

(57) **Abstract**

There are provided measures for data flow path switching. Such measures exemplarily comprise receiving a traffic policy message indicative of a plurality of route selection entries with mutually different priorities, wherein each route selection entry of said plurality of route selection entries includes at least information on a respective traffic route and a respective priority of said respective traffic route, checking whether a candidate traffic route of said plurality of traffic routes corresponding to said plurality of route selection entries higher in priority than a present traffic route of a present data session is available, monitoring for, if said candidate traffic route higher in priority than said present traffic route of said present data session is not available, said candidate traffic route to become available, and deciding to, if said candidate traffic route higher in priority than said present traffic route of said present data session is available, switch from said present traffic route to said candidate traffic route as a new traffic route.

## Description

### Field

Various example embodiments relate to data flow path switching. More specifically, various example embodiments exemplarily relate to measures (including methods, apparatuses and computer program products) for realizing data flow path switching. Particular embodiments relate to enabling access traffic steering, switching and splitting between two non-3GPP access paths.

### Background

The present specification generally relates to single-access (SA) packet data unit (PDU) connectivity services and multi-access (MA) PDU connectivity services.

Access traffic steering, switching and splitting (ATSSS) enables an MA PDU connectivity service, which can exchange PDUs between the UE and a data network by simultaneously using one 3GPP access network and one non-3GPP access network and two independent N3/N9 tunnels between the user plane function (UPF) and radio access network (RAN) / access network (AN).

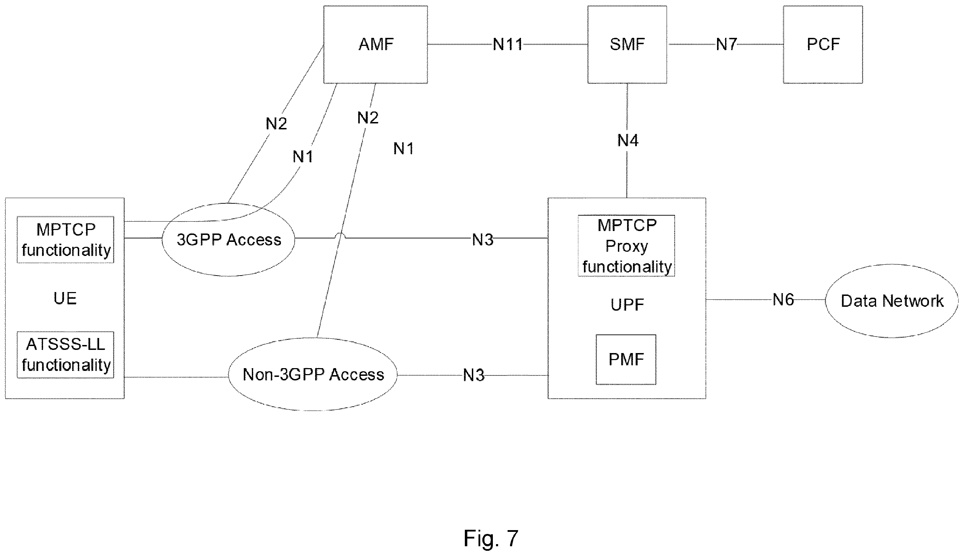

Figure 7 shows a schematic diagram of an example of a system environment with signaling variants according to example embodiments, and in particular illustrates non-roaming and roaming scenarios with local breakout architecture for the mentioned ATSSS support.

The MA PDU connectivity service is realized by establishing an MA PDU session, i.e., a PDU session that may have user-plane resources on two access networks. This assumes that both, the 3GPP access and the non-3GPP access, are allowed for a single network slice selection assistance information (S-NSSAI) of the PDU session.

The UE may request an MA PDU session when the UE is registered via both, 3GPP and non-3GPP accesses, or when the UE is registered via one access only.

However, there may be situations in which change of the non-3GPP access of a UE is required. Such situations may particularly occur during MA PDU sessions. However, such situations may also occur during SA PDU sessions.

Hence, the problem arises that approaches are required for an MA PDU session to support more types of access paths, in particular of non-3GPP access paths, in parallel, to allow for change of the non-3GPP access of a UE, and for triggering the UE to decide to switch from one non-3GPP access to another non-3GPP access. While this problem particularly arises with respect to MA PDU sessions, this problem also arises with respect to SA PDU sessions, such that respective approaches are required as well for SA PDU sessions.

Hence, there is a need to provide for data flow path switching.

### Summary

Various example embodiments aim at addressing at least part of the above issues and/or problems and drawbacks.

Various aspects of example embodiments are set out in the appended claims.

According to an exemplary aspect, there is provided a method comprising receiving a traffic policy message indicative of a plurality of route selection entries with mutually different priorities, wherein each route selection entry of said plurality of route selection entries includes at least information on a respective traffic route and a respective priority of said respective traffic route, checking whether a candidate traffic route of said plurality of traffic routes corresponding to said plurality of route selection entries higher in priority than a present traffic route of a present data session is available, monitoring for, if said candidate traffic route higher in priority than said present traffic route of said present data session is not available, said candidate traffic route to become available, and deciding to, if said candidate traffic route higher in priority than said present traffic route of said present data session is available, switch from said present traffic route to said candidate traffic route as a new traffic route.

According to an exemplary aspect, there is provided a method comprising generating a traffic policy message indicative of a plurality of route selection entries with mutually different priorities based on a traffic route priority order, wherein each route selection entry of said plurality of route selection entries includes at least information on a respective traffic route and a respective priority of said respective traffic route, and transmitting said traffic policy message.

According to an exemplary aspect, there is provided an apparatus comprising receiving circuitry configured to receive a traffic policy message indicative of a plurality of route selection entries with mutually different priorities, wherein each route selection entry of said plurality of route selection entries includes at least information on a respective traffic route and a respective priority of said respective traffic route, checking circuitry configured to check whether a candidate traffic route of said plurality of traffic routes corresponding to said plurality of route selection entries higher in priority than a present traffic route of a present data session is available, monitoring circuitry configured to monitor for, if said candidate traffic route higher in priority than said present traffic route of said present data session is not available, said candidate traffic route to become available, and deciding circuitry configured to decide to, if said candidate traffic route higher in priority than said present traffic route of said present data session is available, switch from said present traffic route to said candidate traffic route as a new traffic route.

According to an exemplary aspect, there is provided an apparatus comprising generating circuitry configured to generate a traffic policy message indicative of a plurality of route selection entries with mutually different priorities based on a traffic route priority order, wherein each route selection entry of said plurality of route selection entries includes at least information on a respective traffic route and a respective priority of said respective traffic route, and transmitting circuitry configured to transmit said traffic policy message.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform receiving a traffic policy message indicative of a plurality of route selection entries with mutually different priorities, wherein each route selection entry of said plurality of route selection entries includes at least information on a respective traffic route and a respective priority of said respective traffic route, checking whether a candidate traffic route of said plurality of traffic routes corresponding to said plurality of route selection entries higher in priority than a present traffic route of a present data session is available, monitoring for, if said candidate traffic route higher in priority than said present traffic route of said present data session is not available, said candidate traffic route to become available, and deciding to, if said candidate traffic route higher in priority than said present traffic route of said present data session is available, switch from said present traffic route to said candidate traffic route as a new traffic route.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform generating a traffic policy message indicative of a plurality of route selection entries with mutually different priorities based on a traffic route priority order, wherein each route selection entry of said plurality of route selection entries includes at least information on a respective traffic route and a respective priority of said respective traffic route, and transmitting said traffic policy message.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient switching of a UE from one non-3GPP access to another non-3GPP access, triggering thereof, as well as utilization of multiple non-3GPP access paths in parallel to allow for the same to thereby solve at least part of the problems and drawbacks identified in relation to the prior art.

By way of example embodiments, there is provided data flow path switching. More specifically, by way of example embodiments, there are provided measures and mechanisms for realizing data flow path switching.

Thus, improvement is achieved by methods, apparatuses and computer program products enabling/realizing data flow path switching.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a schematic diagram of a procedure according to example embodiments,
Figure 6 is a schematic diagram of a procedure according to example embodiments,
Figure 7 shows a schematic diagram of an example of a system environment with signaling variants according to example embodiments,
Figure 8 shows a schematic diagram of signaling sequences according to example embodiments, and
Figure 9 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) data flow path switching.

As mentioned above, there may be situations in which change of the non-3GPP access of a UE is required. Such situations may particularly occur during MA PDU sessions. However, such situations may also occur during SA PDU sessions. Approaches according to example embodiments, when explained with reference to MA PDU session scenarios, are applicable to SA PDU session scenarios as well.

In such scenario, it might be required that the traffic of an MA PDU session can be switched between two non-3GPP access paths in the same public land mobile network (PLMN). On the other hand, in such scenario it might also be required that the traffic of an MA PDU session can be switched between two non-3GPP access paths in different PLMNs.

The non-3GPP access paths considered herein may be trusted non-3GPP access paths or untrusted non-3GPP access paths.

Accordingly, here, the traffic may be switched e.g. between one non-3GPP access path from the UE to a non-3GPP interworking function (N3IWF) in an exemplary PLMN-1 and another non-3GPP access path from the UE to a trusted non-3GPP gateway function (TNGF) in the exemplary PLMN-1 (or in another PLMN). Vice versa, the traffic may be switched e.g. between one non-3GPP access path from the UE to a trusted non-3GPP gateway function (TNGF) in the exemplary PLMN-1 and another non-3GPP access path from the UE to a non-3GPP interworking function (N3IWF) in an exemplary PLMN-1 (or in another PLMN).

In such scenario, the UE registrations via two non-3GPP access paths in PLMN-1 (or in mutually different PLMNs) may be maintained only for the duration needed to switch the traffic from a source non-3GPP access path to a target non-3GPP access path. After switching the traffic, only one UE registration via non-3GPP access may exist.

The UE may also be able to access the exemplary PLMN-1 directly using 3GPP radio technology. In this case, the MA PDU session may have three access paths (including a direct-3GPP access path directly using 3GPP radio technology) for the duration needed to switch the traffic from a source non-3GPP access path to a target non-3GPP access path.

According to example embodiments, existing steering modes and existing steering functionalities may be reused and, if needed, potential enhancements are provided to support, among others, the above scenario.

In particular, in brief, according to example embodiments, under the assumption that an UE has a MA PDU session over 3GPP access (5GS) and non-3GPP access N3GPP_1, the UE obtains new UE route selection policy (URSP) policies from the network (e.g. policy control function (PCF)).

According to example embodiments, the new URSP policies inform the UE e.g. that for traffic identified by a URSP traffic descriptor there are multiple route selection descriptors (RSD) with different priorities.

As an example, the new URSP policies may include the following RSDs with different priorities. Of course, the new URSP policies are not limited to those illustrated below, neither in structure nor in content:
- RSD priority 1, Access Type preference = MA PDU, RAT type preference = TNGF (i.e. N3GPP_2),
- RSD priority 2, Access Type preference = MA PDU, RAT type preference = N3IWF (i.e. N3GPP_1),
- RSD priority 3, Access Type preference = MA PDU (e.g. for legacy UE(s)).

In the URSP policies, the access network (AN) name (e.g. WLAN SSID or TNGF name or something like this) may be indicated. The AN name (e.g. WLAN SSID or TNGF name or something like this) may be considered for selecting a path based on priority.

According to example embodiments, such rule (i.e. the content of new URSP policies according to example embodiments) triggers the UE to switch from N3IWF (N3GPP_1) to TNGF (N3GPP_2) access (in general, from access with lower priority to access with higher priority) when this becomes possible, i.e., when this access becomes available. As mentioned, the AN name (e.g. WLAN SSID or TNGF name or something like this) potentially indicated with the respective RSD may be considered for selecting a path based on priority.

Under the above assumption, according to example embodiments, the UE wants to keep the 3GPP access (5GS) and to switch the non-3GPP access from N3GPP_1 to N3GPP_2.

Hence, according to example embodiments, the registration over 3GPP access is not impacted. Further, according to example embodiments, the UE will keep itself registered over N3GPP_1 until it transfers successfully to N3GPP_2.

According to further example embodiments, after successful registration over N3GPP_2, the UE establishes the new user-plane resources for the MA PDU session over N3GPP_2 while keeping the user-plane resources of the MA PDU session over N3GPP_1.

According to further example embodiments, after that, the UE releases the user-plane resources over N3GPP_1 and de-registers from N3GPP_1.

As mentioned above, approaches according to example embodiments, when explained with reference to MA PDU session scenarios, are applicable to SA PDU session scenarios as well.

Accordingly, according to example embodiments, under the assumption that an UE has a PDU session over non-3GPP access N3GPP_1 (a single-access PDU session), the UE obtains new URSP policies from the network (e.g. PCF).

According to example embodiments, the new URSP policies inform the UE e.g. that for traffic identified by a URSP traffic descriptor there are multiple RSDs with different priorities.

As an example, the new URSP policies may include the following RSDs with different priorities. Of course, the new URSP policies are not limited to those illustrated below, neither in structure nor in content:
- RSD priority 1, Access Type preference = single access PDU over non-3GPP, RAT type preference = TNGF (i.e. N3GPP_2),
- RSD priority 2, Access Type preference = single access PDU over non-3GPP, RAT type preference = N3IWF (i.e. N3GPP_1),
- RSD priority 3, Access Type preference = single access PDU (e.g. for legacy UE(s)).

As with the MA case above, in the URSP policies, the access network (AN) name (e.g. WLAN SSID or TNGF name or something like this) may be indicated. The AN name (e.g. WLAN SSID or TNGF name or something like this) may be considered for selecting a path based on priority.

According to example embodiments, such rule (i.e. the content of new URSP policies according to example embodiments) triggers the UE to switch from N3IWF (N3GPP_1) to TNGF (N3GPP_2) access (in general, from access with lower priority to access with higher priority) when this becomes possible, i.e., when this access becomes available. As mentioned, the AN name (e.g. WLAN SSID or TNGF name or something like this) potentially indicated with the respective RSD may be considered for selecting a path based on priority.

As already explained above for the MA PDU case, according to example embodiments, the UE will keep itself registered over N3GPP_1 until it transfers successfully to N3GPP_2.

As further already explained above for the MA PDU case, according to further example embodiments, after successful registration over N3GPP_2, the UE establishes the new user-plane resources for the SA PDU session over N3GPP_2 while keeping the user-plane resources of the MSAA PDU session over N3GPP_1.

As further already explained above for the MA PDU case, according to further example embodiments, after that, the UE releases the user-plane resources over N3GPP_1 and de-registers from N3GPP_1.

Example embodiments are specified below in more detail.

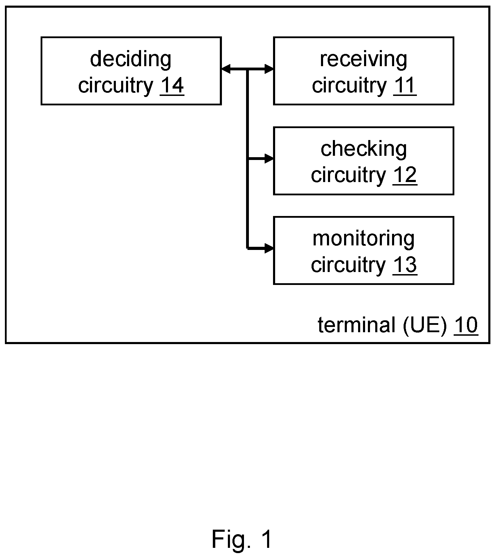

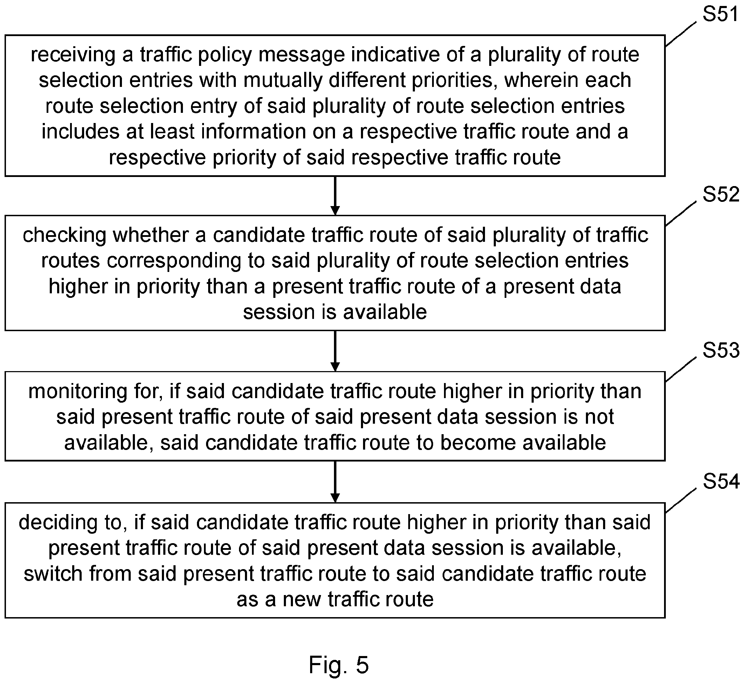

Figure 1 is a block diagram illustrating an apparatus according to example embodiments. The apparatus may be a terminal 10 such as a user equipment comprising a receiving circuitry 11, a checking circuitry 12, a monitoring circuitry 13, and a deciding circuitry 14. The receiving circuitry 11 receives a traffic policy message indicative of a plurality of route selection entries with mutually different priorities, wherein each route selection entry of said plurality of route selection entries includes at least information on a respective traffic route and a respective priority of said respective traffic route. The checking circuitry 12 checks whether a candidate traffic route of said plurality of traffic routes corresponding to said plurality of route selection entries higher in priority than a present traffic route of a present data session is available. The monitoring circuitry 13 monitors for, if said candidate traffic route higher in priority than said present traffic route of said present data session is not available (e.g. as a result of said checking circuitry 12), said candidate traffic route to become available. The deciding circuitry 14 decides to, if said candidate traffic route higher in priority than said present traffic route of said present data session is available (e.g. as a result of said checking circuitry 12 or said monitoring circuitry 13), switch from said present traffic route to said candidate traffic route as a new traffic route. Figure 5 is a schematic diagram of a procedure according to example embodiments. The apparatus according to Figure 1 may perform the method of Figure 5 but is not limited to this method. The method of Figure 5 may be performed by the apparatus of Figure 1 but is not limited to being performed by this apparatus.

As shown in Figure 5, a procedure according to example embodiments comprises an operation of receiving (S51) a traffic policy message indicative of a plurality of route selection entries with mutually different priorities, wherein each route selection entry of said plurality of route selection entries includes at least information on a respective traffic route and a respective priority of said respective traffic route, an operation of checking (S52) whether a candidate traffic route of said plurality of traffic routes corresponding to said plurality of route selection entries higher in priority than a present traffic route of a present data session is available, an operation of monitoring (S53) for, if said candidate traffic route higher in priority than said present traffic route of said present data session is not available, said candidate traffic route to become available, and an operation of deciding (S54) to, if said candidate traffic route higher in priority than said present traffic route of said present data session is available, switch from said present traffic route to said candidate traffic route as a new traffic route.

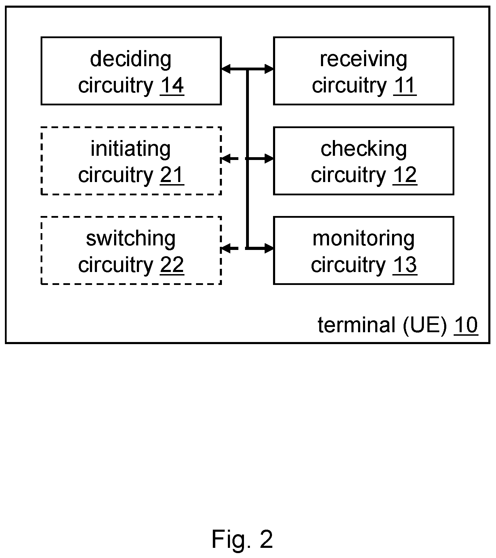

Figure 2 is a block diagram illustrating an apparatus according to example embodiments. In particular, Figure 2 illustrates a variation of the apparatus shown in Figure 1. The apparatus according to Figure 2 may thus further comprise an initiating circuitry 21 and/or a switching circuitry 22.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to further example embodiments, each traffic route of said plurality of traffic routes corresponding to said plurality of route selection entries is a respective non-3GPP access path for accessing a 3GPP network.

According to further example embodiments, said present traffic route is a non-3GPP access path for accessing said 3GPP network.

According to further example embodiments, said present data session is a multi-access packet data unit session having said present traffic route and a direct-3GPP access path for accessing said 3GPP network. Alternatively, according to further example embodiments, said present data session is a single-access packet data unit session having said present traffic route.

According to further example embodiments, each route selection entry of said plurality of route selection entries includes at least one of a type of said respective non-3GPP access path and an identifier of said respective non-3GPP access path.

According to further example embodiments, said present data session is identified by a session identifier of said present data session.

According to further example embodiments, said traffic policy message is received from a policy control function entity of a 3GPP network.

According to further example embodiments, said route selection entry corresponding to said new traffic route includes data session type information corresponding to a data session type of said present data session. According to further example embodiments, said data session type information indicates a multi-access packet data unit session. Alternatively, according to further example embodiments, said data session type information indicates a single-access packet data unit session.

According to a variation of the procedure shown in Figure 5, exemplary additional operations are given, which are inherently independent from each other as such. According to such variation, an exemplary method according to example embodiments may comprise an operation of initiating, upon decision to switch from said present traffic route to said new traffic route, a registration procedure with respect to said new traffic route.

According to a variation of the procedure shown in Figure 5, exemplary additional operations are given, which are inherently independent from each other as such. According to such variation, an exemplary method according to example embodiments may comprise an operation of initiating a session establishment procedure with respect to said new traffic route using a session identifier of said present data session.

According to a variation of the procedure shown in Figure 5, exemplary additional operations are given, which are inherently independent from each other as such. According to such variation, an exemplary method according to example embodiments may comprise an operation of switching traffic of said present data session to said new traffic route using a session identifier.

According to a variation of the procedure shown in Figure 5, exemplary additional operations are given, which are inherently independent from each other as such. According to such variation, an exemplary method according to example embodiments may comprise an operation of initiating a de-registration procedure with respect to said present traffic route.

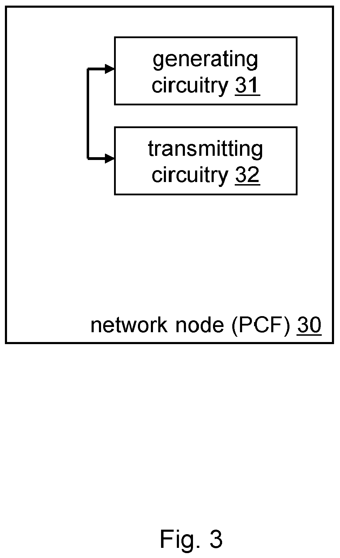

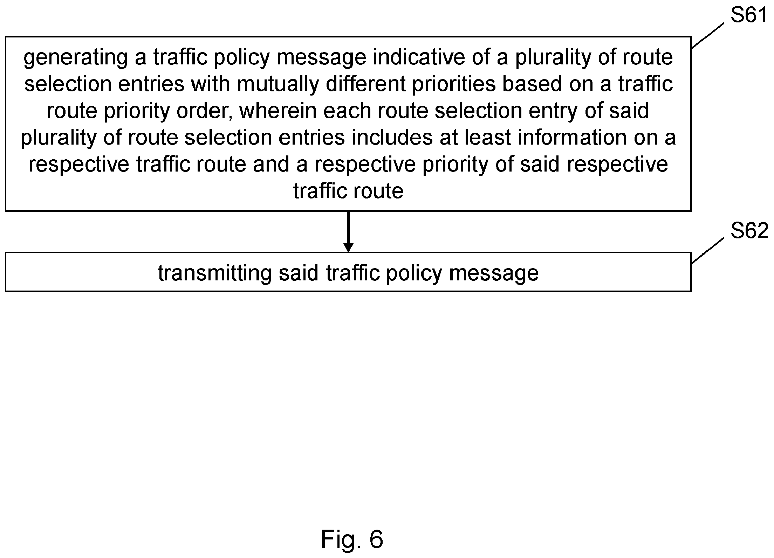

Figure 3 is a block diagram illustrating an apparatus according to example embodiments. The apparatus may be a network node or entity 30 such as a policy control function (entity) comprising a generating circuitry 31 and a transmitting circuitry 32. The generating circuitry 31 generates a traffic policy message indicative of a plurality of route selection entries with mutually different priorities based on a traffic route priority order, wherein each route selection entry of said plurality of route selection entries includes at least information on a respective traffic route and a respective priority of said respective traffic route. The transmitting circuitry 32 transmits said traffic policy message. Figure 6 is a schematic diagram of a procedure according to example embodiments. The apparatus according to Figure 3 may perform the method of Figure 6 but is not limited to this method. The method of Figure 6 may be performed by the apparatus of Figure 3 but is not limited to being performed by this apparatus.

As shown in Figure 6, a procedure according to example embodiments comprises an operation of generating (S61) a traffic policy message indicative of a plurality of route selection entries with mutually different priorities based on a traffic route priority order, wherein each route selection entry of said plurality of route selection entries includes at least information on a respective traffic route and a respective priority of said respective traffic route, and an operation of transmitting (S62) said traffic policy message.

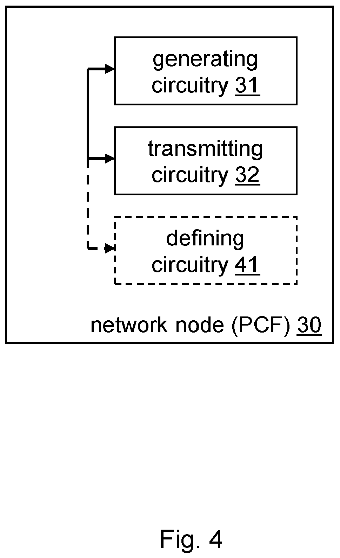

Figure 4 is a block diagram illustrating an apparatus according to example embodiments. In particular, Figure 4 illustrates a variation of the apparatus shown in Figure 3. The apparatus according to Figure 4 may thus further comprise a defining circuitry 41.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to further example embodiments, each traffic route of said plurality of traffic routes corresponding to said plurality of route selection entries is a respective non-3GPP access path for accessing a 3GPP network.

According to further example embodiments, each route selection entry of said plurality of route selection entries includes at least one of a type of said respective non-3GPP access path and an identifier of said respective non-3GPP access path.

According to further example embodiments, said method is a method of a policy control function entity of a 3GPP network.

According to a variation of the procedure shown in Figure 6, exemplary additional operations are given, which are inherently independent from each other as such. According to such variation, an exemplary method according to example embodiments may comprise an operation of defining said traffic route priority order.

According to further example embodiments, each route selection entry includes data session type information indicative of a data session type of a data session for which said respective traffic route is usable as a candidate traffic route.

According to further example embodiments, said data session type information indicates a multi-access packet data unit session. Alternatively, according to further example embodiments, said data session type information indicates a single-access packet data unit session.

Example embodiments outlined and specified above are explained below in more specific terms.

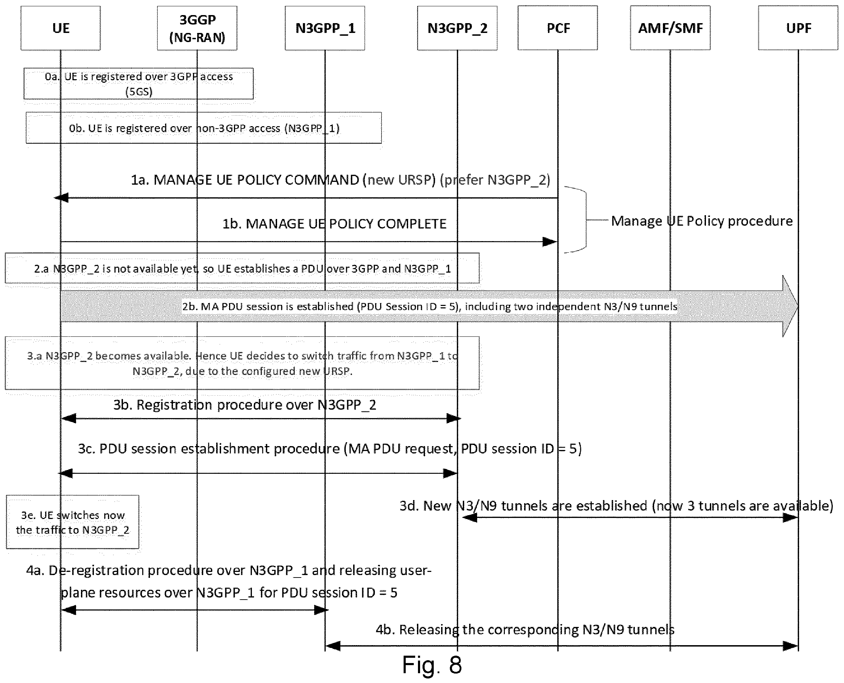

Figure 8 shows a schematic diagram of signaling sequences according to example embodiments, and in particular illustrates an example procedure of the UE switching traffic from exemplary N3GPP_1 to exemplary N3GPP_2.

In step 0a of Figure 8, the UE is registered over 3GPP access (5GS).

In step 0b of Figure 8, the UE is registered over non-3GPP access (N3GPP_1).

In steps 1a and 1b of Figure 8, according to example embodiments, the network (PCF) triggers a Manage UE Policy procedure to update the UE with new URSP policies. The new URSP policies from the network (PCF) informs the UE that for traffic identified by the URSP traffic descriptor (definition unchanged) there are multiple RSDs (with different priorities):
- RSD priority 1, Access Type preference = MA PDU, RAT type preference = TNGF (i.e. N3GPP_2),
- RSD priority 2, Access Type preference = MA PDU, RAT type preference = N3IWF (i.e. N3GPP_1),
- RSD priority 3, Access Type preference = MA PDU (for legacy UE(s)).

According to example embodiments, this rule triggers the UE to switch from N3IWF (N3GPP_1) to TNGF (N3GPP_2) access when this becomes possible, i.r. when N3GPP_2 becomes available.

According to example embodiments, the PCF triggers step 1a based on policies/configurations received from the operator.

In steps 2a and 2b of Figure 8, as N3GPP_2 is not available yet, the UE establishes a MA PDU session which is identified by a certain session identifier (in the considered example case the MA PDU session is identified by an example PDU session ID = 5) over the available accesses (3GPP and N3GPP_1) to serve the available traffic from upper layers.

In step 3a of Figure 8, the N3GPP_2 becomes available. Hence, according to example embodiments, the UE decides to switch traffic from N3GPP_1 to the higher prioritized N3GPP_2 due to the configured new URSP.

Hence, in steps 3b of Figure 8, according to example embodiments, the UE triggers and completes a registration procedure over N3GPP_2, because N3GPP_2 has a priority over N3GPP_1 as per the configured new URSP (steps 1a and 1b of Figure 8).

In steps 3c, 3d, and 3e of Figure 8, according to example embodiments, the UE triggers the MA PDU session establishment over the N3GPP_2, where the same certain session identifier identifying the already established MA PDU session (see steps 2a and 2b of Figure 8 above) (e.g. PDU session ID) is used (i.e., in the considered example case an example PDU session ID = 5 is used). This step triggers the establishment of user plane resources for the PDU session over N3GPP_2, including the N3/N9 tunnel to UPF. After the MA PDU session is established, according to example embodiments, the UE switches the traffic from N3GPP_1 to N3GPP_2.

In steps 4a and 4b of Figure 8, as the traffic is successfully switched to N3GPP_2, the UE de-registers from N3GPP_1 and releases the user plane resources of the PDU session from N3GPP_1.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks. When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

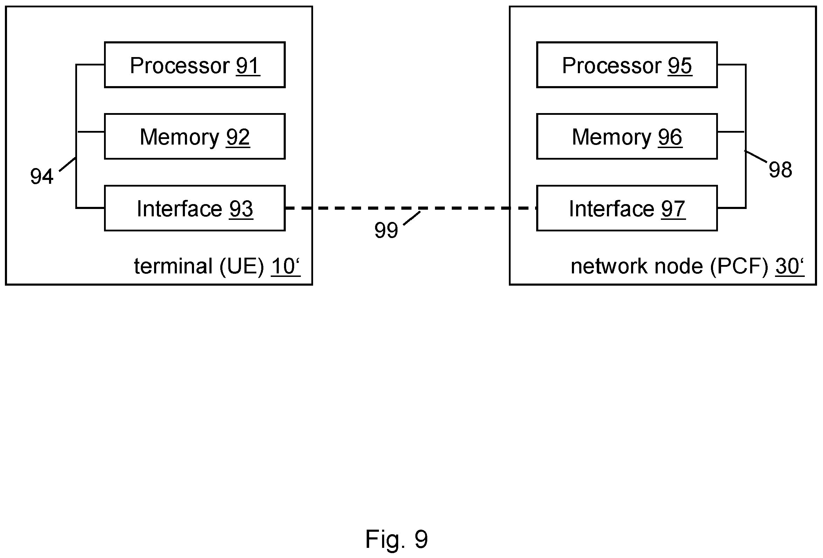

In Figure 9, an alternative illustration of apparatuses according to example embodiments is depicted. As indicated in Figure 9, according to example embodiments, the apparatus (terminal) 10' (corresponding to the terminal 10) comprises a processor 91, a memory 92 and an interface 93, which are connected by a bus 94 or the like. Further, according to example embodiments, the apparatus (network node) 30' (corresponding to the network node 30) comprises a processor 95, a memory 96 and an interface 97, which are connected by a bus 98 or the like, and the apparatuses may be connected via link 99, respectively.

The processor 91/95 and/or the interface 93/97 may also include a modem or the like to facilitate communication over a (hardwire or wireless) link, respectively. The interface 93/97 may include a suitable transceiver coupled to one or more antennas or communication means for (hardwire or wireless) communications with the linked or connected device(s), respectively. The interface 93/97 is generally configured to communicate with at least one other apparatus, i.e. the interface thereof.

The memory 92/96 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the terminal 10 comprises at least one processor 91, at least one memory 92 including computer program code, and at least one interface 93 configured for communication with at least another apparatus. The processor (i.e. the at least one processor 91, with the at least one memory 92 and the computer program code) is configured to perform receiving a traffic policy message indicative of a plurality of route selection entries with mutually different priorities, wherein each route selection entry of said plurality of route selection entries includes at least information on a respective traffic route and a respective priority of said respective traffic route (thus the apparatus comprising corresponding means for receiving), to perform checking whether a candidate traffic route of said plurality of traffic routes corresponding to said plurality of route selection entries higher in priority than a present traffic route of a present data session is available (thus the apparatus comprising corresponding means for checking), to perform monitoring for, if said candidate traffic route higher in priority than said present traffic route of said present data session is not available, said candidate traffic route to become available (thus the apparatus comprising corresponding means for monitoring), and to perform deciding to, if said candidate traffic route higher in priority than said present traffic route of said present data session is available, switch from said present traffic route to said candidate traffic route as a new traffic route (thus the apparatus comprising corresponding means for deciding).

According to example embodiments, an apparatus representing the network node 30 comprises at least one processor 95, at least one memory 96 including computer program code, and at least one interface 97 configured for communication with at least another apparatus. The processor (i.e. the at least one processor 95, with the at least one memory 96 and the computer program code) is configured to perform generating a traffic policy message indicative of a plurality of route selection entries with mutually different priorities based on a traffic route priority order, wherein each route selection entry of said plurality of route selection entries includes at least information on a respective traffic route and a respective priority of said respective traffic route (thus the apparatus comprising corresponding means for generating), and to perform transmitting said traffic policy message (thus the apparatus comprising corresponding means for transmitting).

For further details regarding the operability/functionality of the individual apparatuses, reference is made to the above description in connection with any one of Figures 1 to 8, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for data flow path switching. Such measures exemplarily comprise receiving a traffic policy message indicative of a plurality of route selection entries with mutually different priorities, wherein each route selection entry of said plurality of route selection entries includes at least information on a respective traffic route and a respective priority of said respective traffic route, checking whether a candidate traffic route of said plurality of traffic routes corresponding to said plurality of route selection entries higher in priority than a present traffic route of a present data session is available, monitoring for, if said candidate traffic route higher in priority than said present traffic route of said present data session is not available, said candidate traffic route to become available, and deciding to, if said candidate traffic route higher in priority than said present traffic route of said present data session is available, switch from said present traffic route to said candidate traffic route as a new traffic route.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

At least the following Items are disclosed with the present specification and in particular the above outlined, specified, and explained example embodiments:
Item 1. A method comprising
   receiving a traffic policy message indicative of a plurality of route selection entries with mutually different priorities, wherein each route selection entry of said plurality of route selection entries includes at least information on a respective traffic route and a respective priority of said respective traffic route,
   checking whether a candidate traffic route of said plurality of traffic routes corresponding to said plurality of route selection entries higher in priority than a present traffic route of a present data session is available,
   monitoring for, if said candidate traffic route higher in priority than said present traffic route of said present data session is not available, said candidate traffic route to become available, and
   deciding to, if said candidate traffic route higher in priority than said present traffic route of said present data session is available, switch from said present traffic route to said candidate traffic route as a new traffic route.
Item 2. The method according to Item 1, wherein
   each traffic route of said plurality of traffic routes corresponding to said plurality of route selection entries is a respective non-3GPP access path for accessing a 3GPP network.
Item 3. The method according to Item 2, wherein
   said present traffic route is a non-3GPP access path for accessing said 3GPP network.
Item 4. The method according to Item 3, wherein
   said present data session is a multi-access packet data unit session having said present traffic route and a direct-3GPP access path for accessing said 3GPP network, or
   said present data session is a single-access packet data unit session having said present traffic route.
Item 5. The method according to any of Items 2 to 4, wherein
   each route selection entry of said plurality of route selection entries includes at least one of a type of said respective non-3GPP access path and an identifier of said respective non-3GPP access path.
Item 6. The method according to any of Items 1 to 5, wherein
   said present data session is identified by a session identifier of said present data session.
Item 7. The method according to any of Items 1 to 6, wherein
   said traffic policy message is received from a policy control function entity of a 3GPP network.
Item 8. The method according to any of Items 1 to 7, wherein
   said route selection entry corresponding to said new traffic route includes data session type information corresponding to a data session type of said present data session.
Item 9. The method according to Item 8, wherein
   said data session type information indicates a multi-access packet data unit session, or
   said data session type information indicates a single-access packet data unit session.
Item 10. The method according to any of Items 1 to 9, further comprising
   initiating, upon decision to switch from said present traffic route to said new traffic route, a registration procedure with respect to said new traffic route.
Item 11. The method according to Item 10, further comprising
   initiating a session establishment procedure with respect to said new traffic route using a session identifier of said present data session.
Item 12. The method according to Item 11, further comprising
   switching traffic of said present data session to said new traffic route using said session identifier.
Item 13. The method according to Item 12, further comprising
   initiating a de-registration procedure with respect to said present traffic route.
Item 14. A method comprising
   generating a traffic policy message indicative of a plurality of route selection entries with mutually different priorities based on a traffic route priority order, wherein each route selection entry of said plurality of route selection entries includes at least information on a respective traffic route and a respective priority of said respective traffic route, and
   transmitting said traffic policy message.
Item 15. The method according to Item 14, wherein
   each traffic route of said plurality of traffic routes corresponding to said plurality of route selection entries is a respective non-3GPP access path for accessing a 3GPP network.
Item 16. The method according to Item 15, wherein
   each route selection entry of said plurality of route selection entries includes at least one of a type of said respective non-3GPP access path and an identifier of said respective non-3GPP access path.
Item 17. The method according to any of Items 14 to 16, wherein
   said method is a method of a policy control function entity of a 3GPP network.
Item 18. The method according to any of Items 14 to 17, further comprising
   defining said traffic route priority order.
Item 19. The method according to any of Items 14 to 18, wherein
   each route selection entry includes data session type information indicative of a data session type of a data session for which said respective traffic route is usable as a candidate traffic route.
Item 20. The method according to Item 19, wherein
   said data session type information indicates a multi-access packet data unit session, or
   said data session type information indicates a single-access packet data unit session.
Item 21. An apparatus comprising
   receiving circuitry configured to receive a traffic policy message indicative of a plurality of route selection entries with mutually different priorities, wherein each route selection entry of said plurality of route selection entries includes at least information on a respective traffic route and a respective priority of said respective traffic route,
   checking circuitry configured to check whether a candidate traffic route of said plurality of traffic routes corresponding to said plurality of route selection entries higher in priority than a present traffic route of a present data session is available,
   monitoring circuitry configured to monitor for, if said candidate traffic route higher in priority than said present traffic route of said present data session is not available, said candidate traffic route to become available, and
   deciding circuitry configured to decide to, if said candidate traffic route higher in priority than said present traffic route of said present data session is available, switch from said present traffic route to said candidate traffic route as a new traffic route.
Item 22. The apparatus according to Item 21, wherein
   each traffic route of said plurality of traffic routes corresponding to said plurality of route selection entries is a respective non-3GPP access path for accessing a 3GPP network.
Item 23. The apparatus according to Item 22, wherein
   said present traffic route is a non-3GPP access path for accessing said 3GPP network.
Item 24. The apparatus according to Item 23, wherein
   said present data session is a multi-access packet data unit session having said present traffic route and a direct-3GPP access path for accessing said 3GPP network, or
   said present data session is a single-access packet data unit session having said present traffic route.
Item 25. The apparatus according to any of Items 22 to 24, wherein
   each route selection entry of said plurality of route selection entries includes at least one of a type of said respective non-3GPP access path and an identifier of said respective non-3GPP access path.
Item 26. The apparatus according to any of Items 21 to 25, wherein
   said present data session is identified by a session identifier of said present data session.
Item 27. The apparatus according to any of Items 21 to 26, wherein
   said traffic policy message is received from a policy control function entity of a 3GPP network.
Item 28. The apparatus according to any of Items 21 to 27, wherein
   said route selection entry corresponding to said new traffic route includes data session type information corresponding to a data session type of said present data session.
Item 29. The apparatus according to Item 28, wherein
   said data session type information indicates a multi-access packet data unit session, or
   said data session type information indicates a single-access packet data unit session.
Item 30. The apparatus according to any of Items 21 to 29, further comprising
   initiating circuitry configured to initiate, upon decision to switch from said present traffic route to said new traffic route, a registration procedure with respect to said new traffic route.
Item 31. The apparatus according to Item 30, further comprising
   initiating circuitry configured to initiate a session establishment procedure with respect to said new traffic route using a session identifier of said present data session.
Item 32. The apparatus according to Item 31, further comprising
   switching circuitry configured to switch traffic of said present data session to said new traffic route using said session identifier.
Item 33. The apparatus according to Item 32, further comprising
   initiating circuitry configured to initiate a de-registration procedure with respect to said present traffic route.
Item 34. An apparatus comprising
   generating circuitry configured to generate a traffic policy message indicative of a plurality of route selection entries with mutually different priorities based on a traffic route priority order, wherein each route selection entry of said plurality of route selection entries includes at least information on a respective traffic route and a respective priority of said respective traffic route, and
   transmitting circuitry configured to transmit said traffic policy message.
Item 35. The apparatus according to Item 34, wherein
   each traffic route of said plurality of traffic routes corresponding to said plurality of route selection entries is a respective non-3GPP access path for accessing a 3GPP network.
Item 36. The apparatus according to Item 35, wherein
   each route selection entry of said plurality of route selection entries includes at least one of a type of said respective non-3GPP access path and an identifier of said respective non-3GPP access path.
Item 37. The apparatus according to any of Items 34 to 36, wherein
   said apparatus is an apparatus of a policy control function entity of a 3GPP network.
Item 38. The apparatus according to any of Items 34 to 37, further comprising
   defining circuitry configured to define said traffic route priority order.
Item 39. The apparatus according to any of Items 34 to 38, wherein
   each route selection entry includes data session type information indicative of a data session type of a data session for which said respective traffic route is usable as a candidate traffic route.
Item 40. The apparatus according to Item 39, wherein
   said data session type information indicates a multi-access packet data unit session, or
   said data session type information indicates a single-access packet data unit session.
Item 41. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving a traffic policy message indicative of a plurality of route selection entries with mutually different priorities, wherein each route selection entry of said plurality of route selection entries includes at least information on a respective traffic route and a respective priority of said respective traffic route,
      checking whether a candidate traffic route of said plurality of traffic routes corresponding to said plurality of route selection entries higher in priority than a present traffic route of a present data session is available,
      monitoring for, if said candidate traffic route higher in priority than said present traffic route of said present data session is not available, said candidate traffic route to become available, and
      deciding to, if said candidate traffic route higher in priority than said present traffic route of said present data session is available, switch from said present traffic route to said candidate traffic route as a new traffic route.
Item 42. The apparatus according to Item 41, wherein
   each traffic route of said plurality of traffic routes corresponding to said plurality of route selection entries is a respective non-3GPP access path for accessing a 3GPP network.
Item 43. The apparatus according to Item 42, wherein
   said present traffic route is a non-3GPP access path for accessing said 3GPP network.
Item 44. The apparatus according to Item 43, wherein
   said present data session is a multi-access packet data unit session having said present traffic route and a direct-3GPP access path for accessing said 3GPP network, or
   said present data session is a single-access packet data unit session having said present traffic route.
Item 45. The apparatus according to any of Items 42 to 44, wherein
   each route selection entry of said plurality of route selection entries includes at least one of a type of said respective non-3GPP access path and an identifier of said respective non-3GPP access path.
Item 46. The apparatus according to any of Items 41 to 45, wherein
   said present data session is identified by a session identifier of said present data session.
Item 47. The apparatus according to any of Items 41 to 46, wherein
   said traffic policy message is received from a policy control function entity of a 3GPP network.
Item 48. The apparatus according to any of Items 41 to 47, wherein
   said route selection entry corresponding to said new traffic route includes data session type information corresponding to a data session type of said present data session.
Item 49. The apparatus according to Item 48, wherein
   said data session type information indicates a multi-access packet data unit session, or
   said data session type information indicates a single-access packet data unit session.
Item 50. The apparatus according to any of Items 41 to 49, wherein
   the at least one processor, with the at least one memory and the computer program code, being configured to cause the apparatus to perform:
   initiating, upon decision to switch from said present traffic route to said new traffic route, a registration procedure with respect to said new traffic route.
Item 51. The apparatus according to Item 50, wherein
   the at least one processor, with the at least one memory and the computer program code, being configured to cause the apparatus to perform:
   initiating a session establishment procedure with respect to said new traffic route using a session identifier of said present data session.
Item 52. The apparatus according to Item 51, wherein
   the at least one processor, with the at least one memory and the computer program code, being configured to cause the apparatus to perform:
   switching traffic of said present data session to said new traffic route using said session identifier.
Item 53. The apparatus according to Item 52, wherein
   the at least one processor, with the at least one memory and the computer program code, being configured to cause the apparatus to perform:
   initiating a de-registration procedure with respect to said present traffic route.
Item 54. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      generating a traffic policy message indicative of a plurality of route selection entries with mutually different priorities based on a traffic route priority order, wherein each route selection entry of said plurality of route selection entries includes at least information on a respective traffic route and a respective priority of said respective traffic route, and
      transmitting said traffic policy message.
Item 55. The apparatus according to Item 54, wherein
   each traffic route of said plurality of traffic routes corresponding to said plurality of route selection entries is a respective non-3GPP access path for accessing a 3GPP network.
Item 56. The apparatus according to Item 55, wherein
   each route selection entry of said plurality of route selection entries includes at least one of a type of said respective non-3GPP access path and an identifier of said respective non-3GPP access path.
Item 57. The apparatus according to any of Items 54 to 56, wherein
   said apparatus is an apparatus of a policy control function entity of a 3GPP network.
Item 58. The apparatus according to any of Items 54 to 57, wherein
   the at least one processor, with the at least one memory and the computer program code, being configured to cause the apparatus to perform:
   defining said traffic route priority order.
Item 59. The apparatus according to any of Items 54 to 58, wherein
   each route selection entry includes data session type information indicative of a data session type of a data session for which said respective traffic route is usable as a candidate traffic route.
Item 60. The apparatus according to Item 59, wherein
   said data session type information indicates a multi-access packet data unit session, or
   said data session type information indicates a single-access packet data unit session.
Item 61. A computer program product comprising computer-executable computer program code which, when the program is run on a computer, is configured to cause the computer to carry out the method according to any one of Items 1 to 13 or 14 to 20.
Item 62. The computer program product according to Item 61, wherein the computer program product comprises a computer-readable medium on which the computer-executable computer program code is stored, and/or wherein the program is directly loadable into an internal memory of the computer or a processor thereof.

List of acronyms and abbreviations
- 3GPP: Third Generation Partnership Project
- AN: access network
- ATSSS: access traffic steering, switching and splitting
- MA: multi-access
- N3IWF: non-3GPP interworking function
- PCF: policy control function
- PDU: packet data unit
- PLMN: public land mobile network
- RAN: radio access network
- RSD: route selection descriptor
- S-NSSAI: single network slice selection assistance information
- SA: single-access
- TNGF: trusted non-3GPP gateway function
- UPF: user plane function
- URSP: UE route selection policy

## Claims

1. An apparatus comprising
receiving circuitry configured to receive a traffic policy message indicative of a plurality of route selection entries with mutually different priorities, wherein each route selection entry of said plurality of route selection entries includes at least information on a respective traffic route and a respective priority of said respective traffic route,
checking circuitry configured to check whether a candidate traffic route of said plurality of traffic routes corresponding to said plurality of route selection entries higher in priority than a present traffic route of a present data session is available,
monitoring circuitry configured to monitor for, if said candidate traffic route higher in priority than said present traffic route of said present data session is not available, said candidate traffic route to become available, and
deciding circuitry configured to decide to, if said candidate traffic route higher in priority than said present traffic route of said present data session is available, switch from said present traffic route to said candidate traffic route as a new traffic route.

2. The apparatus according to claim 1, wherein
each traffic route of said plurality of traffic routes corresponding to said plurality of route selection entries is a respective non-3GPP access path for accessing a 3GPP network.

3. The apparatus according to claim 2, wherein
said present traffic route is a non-3GPP access path for accessing said 3GPP network.

4. The apparatus according to claim 3, wherein
said present data session is a multi-access packet data unit session having said present traffic route and a direct-3GPP access path for accessing said 3GPP network, or
said present data session is a single-access packet data unit session having said present traffic route.

5. The apparatus according to any of claims 2 to 4, wherein
each route selection entry of said plurality of route selection entries includes at least one of a type of said respective non-3GPP access path and an identifier of said respective non-3GPP access path.

6. The apparatus according to any of claims 1 to 5, wherein
said present data session is identified by a session identifier of said present data session.

7. The apparatus according to any of claims 1 to 6, wherein
said traffic policy message is received from a policy control function entity of a 3GPP network.

8. The apparatus according to any of claims 1 to 7, wherein
said route selection entry corresponding to said new traffic route includes data session type information corresponding to a data session type of said present data session.

9. The apparatus according to claim 8, wherein
said data session type information indicates a multi-access packet data unit session, or
said data session type information indicates a single-access packet data unit session.

10. The apparatus according to any of claims 1 to 9, further comprising
initiating circuitry configured to initiate, upon decision to switch from said present traffic route to said new traffic route, a registration procedure with respect to said new traffic route.

11. The apparatus according to claim 10, further comprising
initiating circuitry configured to initiate a session establishment procedure with respect to said new traffic route using a session identifier of said present data session.

12. The apparatus according to claim 11, further comprising
switching circuitry configured to switch traffic of said present data session to said new traffic route using said session identifier.

13. The apparatus according to claim 12, further comprising
initiating circuitry configured to initiate a de-registration procedure with respect to said present traffic route.

14. An apparatus comprising
generating circuitry configured to generate a traffic policy message indicative of a plurality of route selection entries with mutually different priorities based on a traffic route priority order, wherein each route selection entry of said plurality of route selection entries includes at least information on a respective traffic route and a respective priority of said respective traffic route, and
transmitting circuitry configured to transmit said traffic policy message.

15. The apparatus according to claim 14, wherein
each traffic route of said plurality of traffic routes corresponding to said plurality of route selection entries is a respective non-3GPP access path for accessing a 3GPP network.

16. The apparatus according to claim 15, wherein
each route selection entry of said plurality of route selection entries includes at least one of a type of said respective non-3GPP access path and an identifier of said respective non-3GPP access path.

17. The apparatus according to any of claims 14 to 16, wherein
said apparatus is an apparatus of a policy control function entity of a 3GPP network.

18. The apparatus according to any of claims 14 to 17, further comprising
defining circuitry configured to define said traffic route priority order.

19. The apparatus according to any of claims 14 to 18, wherein
each route selection entry includes data session type information indicative of a data session type of a data session for which said respective traffic route is usable as a candidate traffic route.

20. The apparatus according to claim 19, wherein
said data session type information indicates a multi-access packet data unit session, or
said data session type information indicates a single-access packet data unit session.

21. A method comprising
receiving a traffic policy message indicative of a plurality of route selection entries with mutually different priorities, wherein each route selection entry of said plurality of route selection entries includes at least information on a respective traffic route and a respective priority of said respective traffic route,
checking whether a candidate traffic route of said plurality of traffic routes corresponding to said plurality of route selection entries higher in priority than a present traffic route of a present data session is available,
monitoring for, if said candidate traffic route higher in priority than said present traffic route of said present data session is not available, said candidate traffic route to become available, and
deciding to, if said candidate traffic route higher in priority than said present traffic route of said present data session is available, switch from said present traffic route to said candidate traffic route as a new traffic route.

22. A method comprising
generating a traffic policy message indicative of a plurality of route selection entries with mutually different priorities based on a traffic route priority order, wherein each route selection entry of said plurality of route selection entries includes at least information on a respective traffic route and a respective priority of said respective traffic route, and
transmitting said traffic policy message.

23. An apparatus comprising
at least one processor,
at least one memory including computer program code, and
at least one interface configured for communication with at least another apparatus,
the at least one processor, with the at least one memory and the computer program code, being configured to cause the apparatus to perform:
receiving a traffic policy message indicative of a plurality of route selection entries with mutually different priorities, wherein each route selection entry of said plurality of route selection entries includes at least information on a respective traffic route and a respective priority of said respective traffic route,
checking whether a candidate traffic route of said plurality of traffic routes corresponding to said plurality of route selection entries higher in priority than a present traffic route of a present data session is available,
monitoring for, if said candidate traffic route higher in priority than said present traffic route of said present data session is not available, said candidate traffic route to become available, and
deciding to, if said candidate traffic route higher in priority than said present traffic route of said present data session is available, switch from said present traffic route to said candidate traffic route as a new traffic route.

24. An apparatus comprising
at least one processor,
at least one memory including computer program code, and
at least one interface configured for communication with at least another apparatus,
the at least one processor, with the at least one memory and the computer program code, being configured to cause the apparatus to perform:
generating a traffic policy message indicative of a plurality of route selection entries with mutually different priorities based on a traffic route priority order, wherein each route selection entry of said plurality of route selection entries includes at least information on a respective traffic route and a respective priority of said respective traffic route, and
transmitting said traffic policy message.

25. A computer program product comprising computer-executable computer program code which, when the program is run on a computer, is configured to cause the computer to carry out the method according to claim 21 or 22, wherein optionally
the computer program product comprises a computer-readable medium on which the computer-executable computer program code is stored, and/or wherein the program is directly loadable into an internal memory of the computer or a processor thereof.
